# EUROPEAN PATENT APPLICATION

(11) **EP 2 562 005 A1**
(43) Date of publication of application: **27.02.2013**
(21) Application number: 10850297.2
(22) Date of filing: 13.05.2010
(51) Int. Cl.: B60B 19/04, B60B 15/16, B60B 15/10, B62B 5/02

(54) **ROAD-ADAPTIVE VARIABLE DRIVE WHEEL**

(30) Priority: 21.04.2010 KR 20100036982
(71) Applicant: Im Technology Co., Ltd, Daejeon 305-509 (KR)
(72) Inventor: JO, Ja-Yun, Daejeon 305-755 (KR)
(74) Representative: Zeitler - Volpert - Kandlbinder
(86) International application number: PCT/KR2010/003035
(87) International publication number: WO 2011/132814

(57) **Abstract**

A road surface adaptive adjustable driving wheel is provided, which has the same moving speed as a general circular type wheel while adapting to a road surface state in the same manner as the caterpillar type wheel, and automatically spreads wing portions of the wheel when the wheel reaches a rugged place without the necessity of separate wheel adjustment constituent elements such as a road surface detection sensor and a control unit. The road surface adaptive adjustable driving wheel includes a driving shaft that is rotatable by driving of a motor, auxiliary driving shafts rotatably engaged with the driving shaft, and adjustable driving bodies each having a head portion that is directly engaged with the auxiliary driving shaft and a wing portion extending from the head portion.

## Description

### TECHNICAL FIELD

The present invention relates to a road surface adaptive adjustable driving wheel, and more particularly to a road surface adaptive adjustable driving wheel in which the shape of a wheel can be adjusted depending on a road surface state.

### BACKGROUND ART

In general, a rotary body that is driven by a driving device uses circular wheels having advantages of high driving speed. However, the rotary body of the circular wheel may easily slip when it moves in a rugged place or passes over the stairs. Accordingly, as a rotary body driven by a driving device that moves over an inclined surface or the stairs, a caterpillar type rotary body has been widely used.

The caterpillar type rotary body does not have great difficulty in moving in a rugged place, for example, in moving over an inclined surface or the stairs. However, the caterpillar type rotary body has the drawback that when rotating in a flatland, the moving speed of the caterpillar type rotary body becomes lower than that of a rotary body rotation type rotary body such as a circular wheel. In addition, the manufacturing of such a caterpillar type rotary body is quite difficult. Accordingly, in a structure that requires a high traveling speed such as a surveillance robot, an adjustable driving wheel that can be adjusted is required rather than the caterpillar type driving wheel having a low moving speed.

That is, an adjustable driving wheel for constantly changing the shape of the wheel has been proposed so that a structure such as a surveillance robot or the like travels using a normal wheel type rotary body in a flatland, and in the case of traveling over an inclined surface or rugged place on which obstacles are placed, the shape of the wheel is changed so as to smoothly overcome the rugged place.

The structure having the above-described adjustable driving wheel is integrally formed in a circular shape to change the mode of the driving wheel or to change the diameter of the rotary body. However, since the surface of the rotary body is integrally formed, the rotary body is driven in a state where the surface is not changed to keep the original shape. Accordingly, although there is no problem when the rotary body travels in a flatland, the surface of the rotary body may slip to cause the rotary body to have difficulty when the rotary body travels over an inclined surface such as the stairs.

Further, since the adjustable driving wheel in the related art uses a method for changing the shape of the wheel through an artificial adjustment command, a configuration that includes a sensor for sensing the ground surface state and a control unit for detecting a signal from the sensor and instructing an adjustment operation is additionally required. However, this surface-state sensitive adjustable driving wheel that uses the artificial operation command malfunctions frequently to lower the efficiency.

In addition, although a method for folding and unfolding wing portions of an adjustable driving wheel, which changes the rotating direction of a rotary shaft, has been proposed, this method requires the change of the rotating shaft, and thus a smooth traveling in the traveling direction may not be achieved.

### DISCLOSURE

### TECHNICAL PROBLEM

Accordingly, the present invention has been made to solve the above-mentioned problems occurring in the related art, and a subject to be achieved by the present invention is to provide a road surface adaptive adjustable driving wheel which has the same moving speed as a general circular type wheel while adapting to a road surface state in the same manner as the caterpillar type wheel.

Another subject to be achieved by the present invention is to provide a road surface adaptive adjustable driving wheel which automatically adapts to a road surface state and automatically spreads wing portions of the wheel when the wheel reaches a rugged place without the necessity of separate wheel adjustment constituent elements such as a road surface detection sensor and a control unit.

Still another subject to be achieved by the present invention is to provide a road surface adaptive adjustable driving wheel which prevents malfunction due to a sensor and a control unit and provides smoother traveling through an automatic adjustment of the wheel depending on a road surface state.

Additional advantages, subjects, and features of the invention will be set forth in part in the description which follows and in part will become apparent to those having ordinary skill in the art upon examination of the following or may be learned from practice of the invention.

### TECHNICAL SOLUTION

In one aspect of the present invention, there is provided a road surface adaptive adjustable driving wheel, which includes a driving shaft that is rotatable by driving of a motor; auxiliary driving shafts rotatably engaged with the driving shaft; and adjustable driving bodies each having a head portion that is directly engaged with the auxiliary driving shaft and a wing portion extending from the head portion.

In a flatland, the adjustable driving bodies are inwardly folded and are in close contact with circumferences of the auxiliary driving shafts to form a circular rotary body as a whole.

In a rugged place in which obstacles are present, if a torque generated by rotation of the auxiliary driving shafts is larger than the weight of the wheel itself, the adjustable driving bodies are expanded in a direction in which the adjustable driving bodies go away from the circumferences of the auxiliary driving shaft to form a wing-shaped rotary body, so that the wheel can easily pass over the obstacles.

Detailed examples of the road surface adaptive adjustable driving wheel according to the present invention will be described later with reference to the drawings.

### ADVANTAGEOUS EFFECTS

The road surface adaptive adjustable driving wheel according to the present invention has the same moving speed as the general circular type wheel while adapting to the road surface state in the same manner as the caterpillar type wheel.

Further, the road surface adaptive adjustable driving wheel according to the present invention does not need separate wheel adjustment constituent elements such as a road surface detection sensor and a control unit to reduce the manufacturing cost, and automatically adapts to the road surface state and automatically expands wing portions of the wheel when the wheel reaches a rugged place to prevent malfunction due to the sensor or the control unit and to provide smoother traveling.

In addition, in the case of reaching the rugged place, since the wheel is rotated in the same rotating direction as in the existing flatland, it is possible to reach the desired destination in a short time without changing the traveling direction.

The effects of the present invention are not limited to the above-described effects, and other unmentioned effects will be clearly understood to those skilled in the art from the description of claims.

### DESCRIPTION OF DRAWINGS

The above and other subjects, features and advantages of the present invention will be more apparent from the following detailed description taken in conjunction with the accompanying drawings, in which:

FIG. 1 is a view illustrating the structure in which a road surface adaptive adjustable driving wheel according to an embodiment of the present invention forms a circular rotary body;

FIG. 2 is a view illustrating an engagement structure of an auxiliary driving shaft and an adjustable driving body in the road surface adaptive adjustable driving wheel according to an embodiment of the present invention;

FIG. 3 is a view illustrating the structure in which a road surface adaptive adjustable driving wheel according to an embodiment of the present invention forms a wing-shaped rotary body;

FIG. 4 is a view explaining the principle of forming a wing-shaped rotary body of the road surface adaptive adjustable driving wheel according to an embodiment of the present invention; and

FIG. 5 is a view illustrating a driving means to which the road surface adaptive adjustable driving wheel according to the present invention has been applied.

### BEST MODE FOR INVENTION

The present invention will now be described more fully hereinafter with reference to the accompanying drawings, in which preferred embodiments of the invention are shown. This invention may, however, be embodied in different forms and should not be construed as limited to the embodiments set forth herein. Rather, these embodiments are provided so that this disclosure will be thorough and complete, and will fully convey the scope of the invention to those skilled in the art. The same reference numbers indicate the same components throughout the specification. In the attached figures, the thickness of layers and regions is exaggerated for clarity.

Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

The present invention will be described with reference to perspective views, cross-sectional views, and/or plan views, in which preferred embodiments of the invention are shown. Thus, the profile of an exemplary view may be modified according to manufacturing techniques and/or allowances. That is, the embodiments of the invention are not intended to limit the scope of the present invention but cover all changes and modifications that can be caused due to a change in manufacturing process. Thus, regions shown in the drawings are illustrated in schematic form and the shapes of the regions are presented simply by way of illustration and not as a limitation.

Hereinafter, preferred embodiments of the present invention will be described in detail with reference to the accompanying drawings.

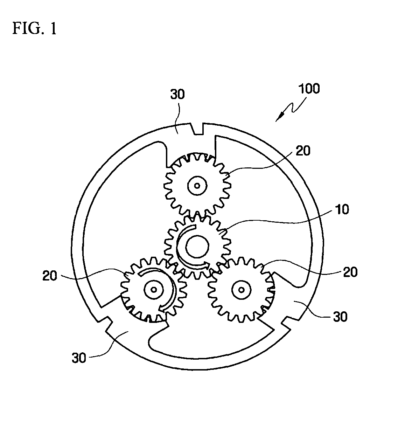

FIG. 1 is a view illustrating the shape of a road surface adaptive adjustable driving wheel according to an embodiment of the present invention. FIG. 1 shows that adjustable driving bodies 30 to be described later form a circular rotary body 100 so that the driving bodies can easily move on a flatland. The road surface adaptive adjustable driving wheel according to an embodiment of the present invention includes a driving shaft 10 that is rotatable by driving of a motor, auxiliary driving shafts 20 rotatably engaged with the driving shaft 10, and adjustable driving bodies 30 engaged with the circumferences of the auxiliary driving shafts 20 to be foldable according to rotation of the auxiliary driving shafts 20.

If a motor (not illustrated) is rotated, a rotating force generated by the motor is transferred to the driving shaft 10 to rotate the driving shaft 10. If the driving shaft 10 is rotated, the auxiliary driving shafts 20 rotatably engaged with the driving shaft 10 are also rotated. The kinds of the driving shaft 10 and the auxiliary driving shafts 20 for transferring the rotating shaft are not restricted. For example, the driving shaft 10 and the auxiliary driving shafts 20 may be configured as a pair of spur gears having gear teeth formed on the circumferences of the driving shaft 10 and the auxiliary driving shafts 20, or may be configured to transfer the rotating force through a friction drum type. Further, the driving shaft 10 and the auxiliary driving shafts 20 may be configured to receive the rotating force through a belt connecting the driving shaft 10 and the auxiliary driving shafts 20 in a closed loop. According to the rotating force transferring types, the shape, diameter or cross-sectional shape of the circumferences of the driving shaft 10 and the auxiliary driving shafts 20 may differ depending on the type of transferring the rotating force.

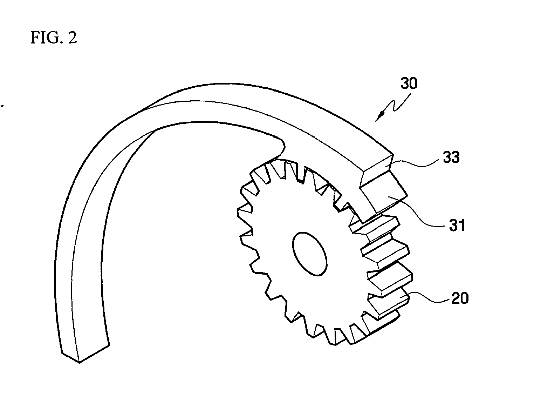

As illustrated in FIG. 2, each of the plurality of auxiliary driving shafts 20 is engaged with each of the adjustable driving bodies 30. The adjustable driving body 30 is composed of a head portion 31 that is directly engaged with the auxiliary driving shaft 20 and a wing portion 32 extending from the head portion 31. The number of the adjustable driving bodies 30 is the same as the number of the auxiliary driving shafts 20, and if the auxiliary driving shafts 20 are in the shape of spur gears, the gear teeth may be formed on the circumferences of the adjustable driving bodies 30 so that the head portions 31 of the adjustable driving bodies 30 are rotatably engaged with the auxiliary driving shafts 20. That is, if the auxiliary driving shafts 20 are rotated, the head portions 31 and the wing portions 32 of the adjustable driving bodies 30, which are engaged with the auxiliary driving shafts 20, swing around the rotating shafts of the auxiliary driving shafts 20. The shape of the adjustable driving body 30 is not restricted, but it is preferable that the wing portions of the adjustable driving bodies 30 are extended in an arc shape so that the adjustable driving bodies 30 are inwardly folded as shown in FIG. 1 and form a circular rotary body 100 to facilitate the movement of the wheel on the flatland. The curvature of the arc may be determined depending on the number of adjustable driving bodies 30. That is, since the circumferences of the plurality of adjustable driving bodies 30 integrally form the circular wheel, the extended length of the wing portion 32 becomes shorter and the curvature becomes smaller as the number of adjustable driving bodies 30 becomes larger. At this time, the plurality of adjustable driving bodies 30 contact the end portions of other neighboring adjustable driving bodies 30, and in order for the circular rotary body 100 to form a complete circle without being bent, as illustrated in FIG. 2, it is preferable that the end portion of the head portion 31 has a tapered groove 33. That is, the end portion of the wing portion 32 is accommodated in the groove 33 formed on the head portion 31 of the neighboring adjustable driving body 30 to form a smooth circular rotary body 100 as a whole without projection of the circumference as shown in FIG. 1.

FIG. 1 shows the shape in which the adjustable driving bodies 30 are inwardly folded and become in close contact with the circumferences of the auxiliary driving shafts 20 to form the circular rotary body 100. More specifically, the circular rotary body 100 is formed in a manner that a wing portion 32 of one adjustable driving body 30 is accommodated in the groove 33 formed on the head portion 31 of the neighboring adjustable driving body 30. The road surface adaptive adjustable driving wheel according to an embodiment of the present invention forms the circular rotary body 100 on the flatland, and can travel in a desired direction by a reaction and frictional force generated by the rotation in a state where the wheel is in close contact with the road surface like a general circular wheel. If necessary, a special coating process may be performed with respect to the outer surface of the adjustable driving body 30 to facilitate the traveling through heightening of the frictional force or to improve the lifespan of the product through heightening of the durability. For example, in the case where the adjustable driving bodies 30 form the circular rotary body 100, the circumference thereof may be rubber-coated and the frictional force is heighted to improve the moving speed.

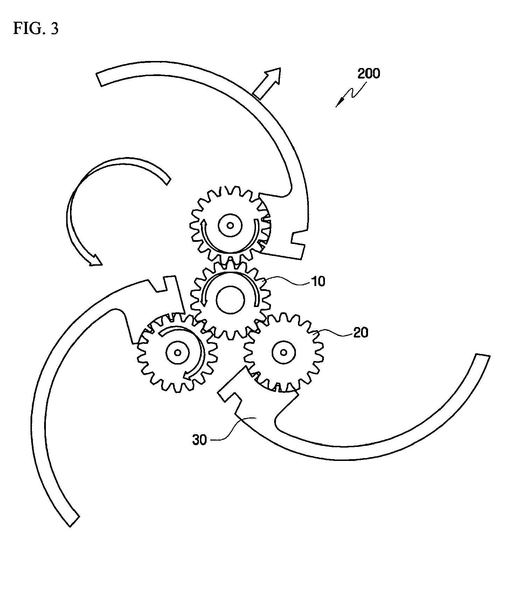

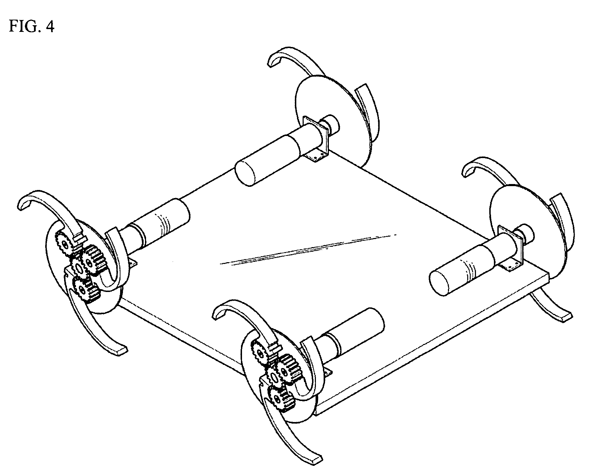

On the other hand, if the road surface is not the flatland, that is, in a mountain path or in irregular road surface state, it is difficult for the circular rotary body 100 as shown in FIG. 1 to travel. In particular, if a stepped portion is formed, for example, if the wheel travels on a block between a vehicle road and a sidewalk, the circular rotary body 100 may be momentarily separated from the ground surface and the force for traveling may not be provided. In this case, the adjustable driving bodies 30 are spread to form a wing-shaped rotary body 200 as shown in FIG. 3. That is, the wing portions 32 of the adjustable driving bodies 30 are spread to stand up in a direction in which the wing portions 32 go away from the adjustable driving shafts to form the wing-shaped rotary body 200. The wing-shaped rotary bodies 200 have a diameter that is larger than that of the circular rotary body 100, and thus are stable in passing over the obstacles or traveling on a stepped path. As shown in FIG. 4, a moving body to which the road surface adaptive adjustable driving wheel according to an embodiment of the present invention is applied can easily overcome the rugged place to continue the traveling.

As described above, according to the road surface adaptive adjustable driving wheel according to an embodiment of the present invention, the circular rotary body 100 and the wing-shaped rotary body 200 are adjustably formed depending on the road state, and in such an adjustable operation, it is not required to adopt a configuration that corresponds to a sensor for separately sensing the road state or a control unit for electronically controlling the adjustable operation through analysis of the road state that is captured by the sensor. That is, the circular rotary body 100 is automatically changed to the wing-shaped rotary body 200 depending on the road state.

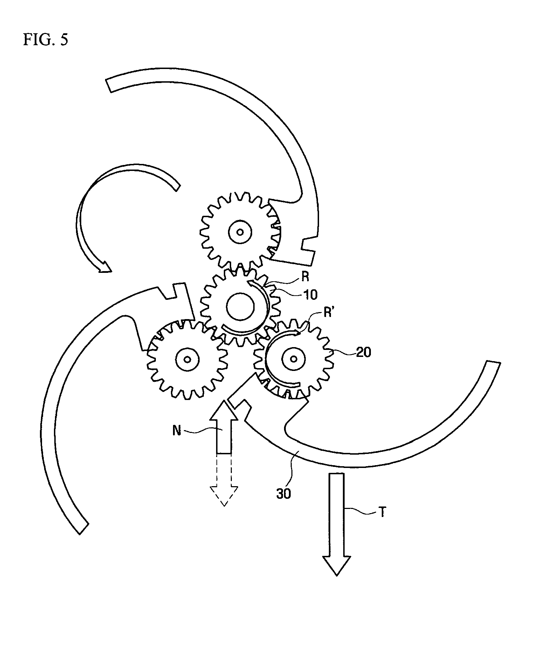

The automatic adjustment principle is schematically illustrated in FIG. 5. The automatic adjustment principle will be described with reference to FIG. 5. That is, in a flatland, the wheel is in the form of the circular rotary body 100 as shown in FIG. 1. The driving shaft 10 is rotated (indicated by R in the drawing) by the motor, and the plurality of auxiliary driving shafts 20 that are engaged with the driving shaft 10 receive a rotating force R'. At this time, in the flatland, a vertical component T of a torque that is applied to the adjustable driving bodies 30 by the auxiliary driving shaft 20 becomes smaller than a normal force N which is parallel to a force that corresponds to a load of the overall body including the road surface adaptive adjustable driving wheel. Accordingly, since the normal force N is larger than the force that acts to spread the wing portions 32 of the adjustable driving body 30 by the torque, the wing portions 32 are inwardly folded to maintain the circular rotary body 100 to continue the traveling. At this time, among the plurality of adjustable driving bodies 30 that form the circular rotary body 100, only one adjustable driving body 30, which comes in contact with the ground surface at a certain time, is restrained from being spread by the normal force N. Accordingly, the wing portions 32 of other adjustable driving bodies 30, which do not come in contact with the ground surface, are spread to stand up. As described above, since grooves 33 are additionally formed at end portions of the head portions 31, the neighboring adjustable driving bodies 30 press each other to maintain the state of the circular rotary body 100, and thus the wing portions 32 are prevented from being spread in the flatland.

If the wheel meets an obstacle O during the traveling or if the wheel passes over a stepped portion in a rugged place, a part of the wheel is momentarily separated from the ground surface, and at this moment, a greater force than usual is applied to the driving shaft 10. Due to this, a torque caused by the rotation of the adjustable driving bodies is increased. If the vertical direction component T of the increased torque becomes larger than the normal force N, it overcomes the normal force N, and the wing portions 32 of the adjustable driving bodies 30 are spread to stand up around the centers of the auxiliary driving shafts 20, respectively, in a direction in which the wing portions 32 go away from the circumferences of the auxiliary driving shafts 20 to form the wing-shaped rotary body 200. Accordingly, even without a separate electronic control, the road surface adaptive adjustable driving wheel according to the present invention is changed from the state of the circular rotary body 100 to the state of the wing-shaped rotary body 200 depending on the road state, and thus can overcome the rugged place to continue a stable traveling.

In the case where the adjustable driving bodies 30 form the wing-shaped rotary body 200, as illustrated in FIG. 5, the head portions 31 of the adjustable driving bodies 30 move along the rotating direction (clockwise direction in the drawing) R', and come in contact with the circumference of the driving shaft 10. Accordingly, the adjustable driving bodies 30 are unable to rotate. As described above, this stopping state of the wing-shaped rotary bodies 200 of the adjustable driving bodies 30 can be maintained by the circumference of the driving shaft 10, and it becomes possible to overcome the rugged places.

By the above-described principle, the road surface adaptive adjustable driving wheel according to the present invention can automatically change the wheel state depending on the road surface state, and particularly, can maintain the same traveling state regardless of the state change of the road surface adaptive adjustable driving wheel.

Although preferred embodiments of the present invention have been described for illustrative purposes, those skilled in the art will appreciate that various modifications, additions and substitutions are possible, without departing from the scope and spirit of the invention as disclosed in the accompanying claims.

## Claims

1. A road surface adaptive adjustable driving wheel comprising:
a driving shaft that is rotatable by driving of a motor;
auxiliary driving shafts rotatably engaged with the driving shaft; and
adjustable driving bodies each having a head portion that is directly engaged with the auxiliary driving shaft and a wing portion extending from the head portion.

2. The road surface adaptive adjustable driving wheel of claim 1, wherein the adjustable driving bodies are inwardly folded and are in close contact with circumferences of the auxiliary driving shafts so as to form a circular rotary body as a whole.

3. The road surface adaptive adjustable driving wheel of claim 1, wherein if a component in vertical direction of a torque generated by rotation of the auxiliary driving shafts is larger than a normal force of the road surface adaptive adjustable driving wheel, the adjustable driving bodies are spread in a direction in which the wing portions go away from the circumferences of the auxiliary driving shafts to form a wing-shaped rotary body.

4. The road surface adaptive adjustable driving wheel of claim 3, wherein when the adjustable driving bodies form the wing-shaped rotary body, the head portions of the adjustable driving bodies make contact with the circumferences of the driving shafts to be supported.

5. The road surface adaptive adjustable driving wheel of claim 1, wherein the driving shaft and the auxiliary driving shafts are composed of spur gears having gear teeth formed on the circumferences thereof to be rotatably engaged with each other.

6. The road surface adaptive adjustable driving wheel of claim 1, wherein the driving shaft and the auxiliary driving shafts are engaged with each other by a friction drum to be rotated.

7. The road surface adaptive adjustable driving wheel of claim 1, wherein the driving shaft and the auxiliary driving shafts are engaged with each other by a belt.

8. The road surface adaptive adjustable driving wheel of claim 1, wherein the wing portions are extended in an arc shape.

9. The road surface adaptive adjustable driving wheel of claim 1, wherein a groove is formed on the head portion of the adjustable driving body to accommodate therein an end portion of the wing portion of another neighboring adjustable driving body.

10. The road surface adaptive adjustable driving wheel of claim 1, wherein an outer surface of the adjustable driving body is rubber-coated.
